# EUROPEAN PATENT APPLICATION

(11) **EP 2 071 673 A2**
(43) Date of publication of application: **17.06.2009**
(21) Application number: 08021090.9
(22) Date of filing: 04.12.2008
(51) Int. Cl.: H01R 9/22, H01R 13/52

(54) **Coupling device**

(30) Priority: 12.12.2007 DE 102007059682
(71) Applicant: Tyco Electronics Raychem GmbH, 85521 Ottobrunn (DE)
(72) Inventor: Schulz, Norbert, 81827 München (DE)
(74) Representative: Grünecker, Kinkeldey, Stockmair & Schwanhäusser Anwaltssozietät

(57) **Abstract**

The invention relates to a coupling device for branch and/or connection boxes, fillable with insulating gel, for cables, in particular for low-voltage cables, which is intended, with such branch and/or connection boxes, to reduce the effort involved in connecting two spaced-apart cable ends and at the same time to guarantee the quality of the connection point, which is subject to certain requirements in the class of protection relating to protection against moisture and which may be achieved by means of an insulating gel. The object is achieved in that the two branch and/or connection boxes are fillable with insulating gel are connected together by a mechanical coupling device.

## Description

The invention relates to a coupling device for coupling branch and/or connection boxes, which are fillable with an insulating gel, for cables, in particular low-voltage cables.

A box for a cable connection which is used for connecting cables, in particular low-voltage cables, is known from DE 10 2005 010 075 A1. By using such a connection box, cables may be connected together by connecting cable ends together by means of a cable terminal, as known for example from DE 10 2004 009 207 A1. The connection point is then inserted into the connection box and the connection box is closed. The connection box is filled with an insulating gel once the connection point is introduced into the box, and the insulating gel surrounds the connection point. After the box is closed, the connection point is insulated against moisture. In the process, the insulating gel flows into present cavities and seals them.

In practice, if a cable is damaged, the damaged part of the cable is cut out, such that the remaining ends of the cable are spaced apart by a distance that is greater than the length of a connection box. In such a case, a connection box is attached to each end of the existing cables, and then an additional piece of cable is put in place between the connection boxes in order to connect the cable ends.

It is necessary to prepare the additional cable accordingly, which requires the following steps:
cutting the cable to length, removing the individual, sometimes multiple sheath layers, and stripping insulation from the conductor elements/cables. In flexible cables, conductor ends must also be prepared, for example with ferrules. Furthermore, it is optionally necessary to provide additional strain relief devices or dust protection means, for instance PG screwed glands or grommets, on the connection boxes. Such means are generally conformed to the cross-section of the cable in question immediately before installation. This may mean that a conical rubber grommet is cut to size or the rubber-type deformation insert of a PG screwed gland is conformed to the cable cross-section by punching. The piece of additional cable is connected to the cable terminals in the connection boxes after preparation, a plurality of fastening screws requiring tightening, which is carried out as a rule by hand and is time-consuming.

The steps listed above are only necessary when extra cable is needed between the branch and/or connection boxes, and the extra cable comprises sheathing that provides the appropriate touch and moisture protection.

When the steps listed above are carried out, human error may occur, wherein the number of occurring errors may be proportional to the number of steps. In particular, damage may occur during the removal of sheathing and stripping of insulation from cables, and may have an effect on the quality of electrical transfer or on insulation quality. For example, the insulation layer of a wire may be cut during sheath removal, or a copper wire may be notched during insulation stripping.

An object of the invention is to limit the effort required in connecting spaced-apart cable ends. At the same time, the object of the invention is to guarantee the quality of the point of connection, because the point of connection is subject to certain requirements relating to moisture protection. An insulating gel may be used in order to accomplish that type of protection.

According to the invention, the effortless and quality connection is achieved by using a coupling device for coupling together branch and/or connection boxes, wherein the connection boxes are fillable with an insulating gel for cables, in particular low-voltage cables. In each case, the coupling device comprises on two sides, at least one mechanically engaging retaining means for mechanically connecting the coupling device to a branch and/or connection box, and at least one lead-through element. Each lead-through element comprises at least one through connection opening, which is constructed so as to spatially connect the branch and/or connection boxes.

The coupling is easily prepared using the coupling means and mechanical connection, by means of the lead-through element. The lead-through element provides the connection means located therein, such as a cable passed there through, with good protection against external influences. In particular, an insulating gel may extend at least in part into the connection opening of the lead-through element.

Two connection boxes may be connected together in series, one behind the other, by means of the coupling device. In fact, a plurality of coupling devices may be used in order to hold together a plurality of boxes.

Preferably, the retaining means and the lead-through element are in one piece with one another. This simplifies handling and construction. Additionally, the coupling device may be highly leak proof, because of the one-piece construction.

The retaining means and/or the lead-through element may be manufactured as a unitary construction, using a manufacturing method such as injection molding. Therefore, the lead-through element and/or the retaining element may be simply produced in the desired numbers, while at the same time being of high and uniform quality.

However, it may be preferable to manufacture the coupling device, with the retaining elements and the lead-through element, as a multipart construction. The coupling device may then be produced from semi finished products, which may be less expensive for similar numbers of items, and could allow modular construction of a coupling device product range.

It is possible that the retaining means is held by friction fit, in the branch and/or connection boxes. In this way, the mechanical construction of the retaining means and of the branch and/or connection box could be simplified, if the retaining means could rest against friction surfaces and fewer openings had to be provided in the branch and/or connection box.

In one embodiment of the invention, the lead-through element may be bent and/or angled. This could be particularly useful if the cable ends to be connected become offset or inclined relative to one another.

In a preferred embodiment of the invention, the retaining means have a cross-sectional shape that corresponds to the opening in the branch and/or connection box. The retaining means may retain the insulating gel, as the insulating gel spreads out in the branch and/or connection box. Further, the retaining means may divert the insulating gel in such a way that the connection opening of the lead-through element may likewise be filled with displaced insulating gel.

In another embodiment, the retaining means may have a rounded circumferential cross-sectional shape. The retaining means could be made with higher tolerances in the area of the corners of the opening in the branch and/or connection box. As follows, production costs could be reduced.

In one embodiment of the invention, the retaining means of a coupling device may be of varying construction, in particular of different sizes. Thus, branch and/or connection boxes of different sizes could be joined together and the coupling device could act as a kind of adapter.

The lead-through element may conveniently be of rigid construction. The connected-together branch and/or connection boxes are thus connected rigidly together. As follows, mechanical influences, such as for instance torsion or deformation, may be kept away from connecting means disposed inside the branch and/or connection boxes.

It is possible that the for the lead-through element to be of flexible construction, which would simplify use with a flexible cable and could assist in adaptation to cable ends lying offset or at an angle relative to one another.

In one embodiment of the invention, the lead-through element may be of tubular construction. A tubular construction is particularly suitable for leading through cables while achieving good resistance against bending of the lead-through element under load in various directions.

It is preferred that the lead-through element be of shielding construction, in particular by way of a metallic casing. In this way, the effect of electromagnetic fields could be reduced in the region of the lead-through element, which electromagnetic fields may have an influence, for example, on control cables and/or telecommunications cables.

In particular, an assembly with at least two cable terminals, at least one cable and the coupling element may be provided, wherein the cable terminals are connected together by at least one cable and at least one cable may be provided passed through the lead-through opening of the coupling element. Such a preassembled or kit-form assembly could simplify construction considerably, since the corresponding cable ends of the cable, to be connected together, could merely be connected to the cable terminals that have already been connected together. However, the cable terminals could also be simply connected together by cables that have already been prepared, cut to size, and can be passed through the lead-through opening. This construction would simplify cable repair considerably, and save time.

Conveniently, a kit comprising the assembly and at least two branch and/or connection boxes may be provided. At least two branch and/or connection boxes may be connected together mechanically, using a coupling device. The cable terminals may, in each case, be introduced into a branch and/or connection box, and the cable may be passed through the connection opening of the coupling device, connecting the cable terminals together electrically. This kit could be available as a preassembled repair kit or as individual parts. Such a kit could simplify and speed up repair, since the internal connecting cables could be present in the given length, it being necessary merely to prepare the cable ends of the cable to be connected.

A number of embodiments of the invention are explained below and illustrated in the figures, in which:
Figure 1 is a schematic representation of a branch and/or connection box with an example of a cable connection point but without the coupling device according to the invention;
Figure 2 is a perspective view according to a first embodiment of a coupling device according to the invention;
Figure 3 is an end-on view of a coupling device according to the invention as illustrated in Figure 2;
Figure 4 is a sectional view through the coupling device, according to the invention, along section line A-A of Figure 3;
Figure 5 is a schematic representation of a second embodiment of a coupling device according to the invention;
Figure 6 is a schematic representation of a third embodiment of a coupling device according to the invention;
Figure 7 is a schematic representation of an assembly with the first embodiment of the invention and;
Figure 8 is a schematic representation of a kit comprising the assembly of Figure 7 with a coupling device according to the invention.

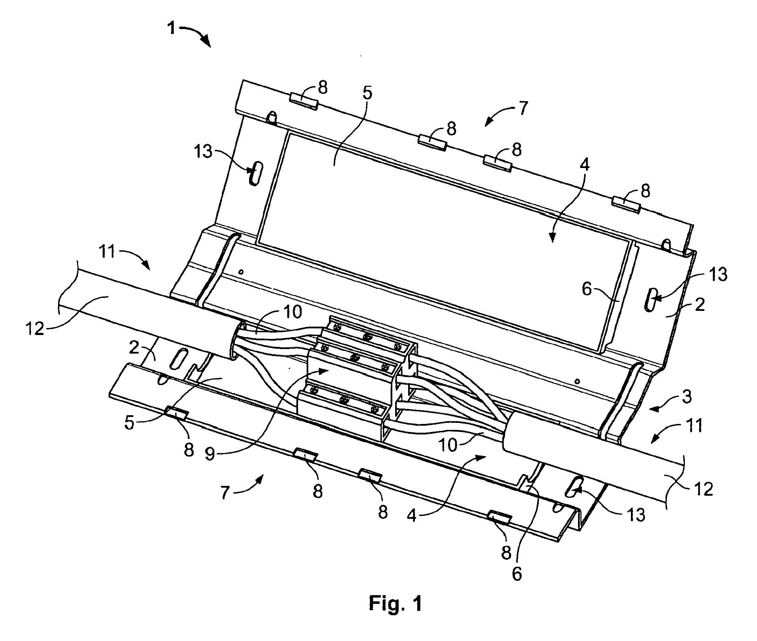

Figure 1 shows a branch and/or connection box 1 comprising two box halves 2 which are joined together in hinged manner in a hinge area 3. The box halves 2 each have a trough 4, which may be filled with an insulating gel 5. In Figure 1, the troughs 4 have been filled with the insulating gel 5. The troughs 4 are dimensioned by end walls 6 and the box halves 2. On the long sides 7 of the box halves 2 there are located snap-together closing means 8, which hold the box halves 2 together in the closed state. In addition, the box halves 2 may be fixed in the closed state and/or to other objects using cable ties.

A terminal 9 has been inserted into one box half 2, then being connected at the ends in each case with a plurality of conductor elements 10 of a cable 11. The cables 11 are made from the insulated conductor elements 10, and a sheath 12.

Furthermore, the box halves 2 are provided with a plurality of orifices 13, which here take the form of elongate holes in each case arranged crosswise relative to the long sides 7 at the ends of the box halves 2.

The box halves 2 are made of plastics, for instance polypropylene (PP), and act as insulation with regard to electrical voltage.

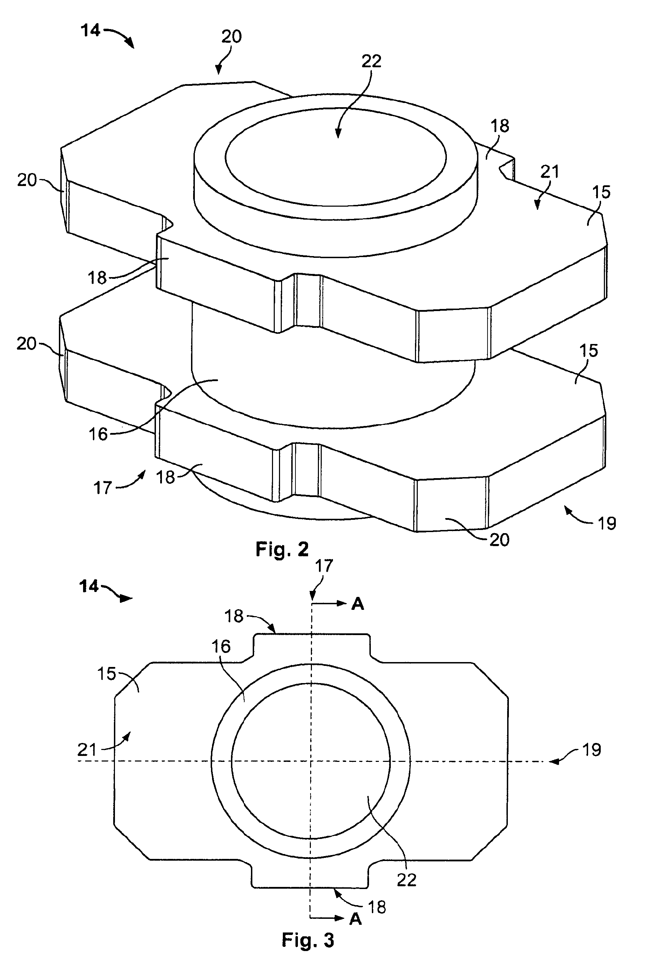

Figure 2 shows a first embodiment of the coupling device 14 according to the invention, having two retaining means 15 and a lead-through element 16. The retaining means 15 are of plate-shaped construction, and each retaining means 15 comprises a projection 18 in the region of the longer sides 17. The longer sides 17 and the shorter sides 19 come together at the corners forming chamfers 20. The retaining means 15 are parallel to one another and spaced apart along the lead-through element 16. Part of the lead-through element 16 projects beyond the end faces 21 of each retaining means 15.

In this embodiment, the circumferential cross-sectional shape of the retaining means 15 is conformed substantially to the shape of an opening that arises in the region of the orifices 13 at the ends of the branch and/or connection box 1 upon closure thereof.

The projections 18 are constructed to engage with the orifices 13, crosswise relative to the lengthwise extension of a box.

The lead-through element 16 is of tubular construction and comprises a connection opening 22 inside it, which is arranged concentrically to the tubular form of the lead-through element 16.

When using telecommunications cables or other cables, which transmit signals, it may be convenient for the coupling device 14 to be of shielding construction. In this case, the coupling device 14 could comprise a metallic sleeve within the lead-through element 16 or comprise a metallic insert. This could contribute to protecting against the influence of electromagnetic fields.

In an alternative embodiment, the projections 18, as shown in Figure 2, may also be omitted. The faces of the sides 17 and 19 may hold the retaining means 15 in place by resting with a friction fit against the box halves 2.

Figure 3 shows an end-on view in the direction of the end face 21, of the coupling device 14. This view makes it clear that the connection opening 22 is located substantially in the center of the end face 21.

In other embodiments, the connection opening 21 could be provided at another point of the end face 21. Additionally, a plurality of connection openings 22 and a plurality of lead-through elements 16 could be provided. The projections 18 could just as well be located on the shorter sides 19 of the retaining means 15 or a plurality of projections could be located on one side or projections could be located on all the sides. The number and position of the projections 18 is not limited to what is shown in Figures 2 and 3.

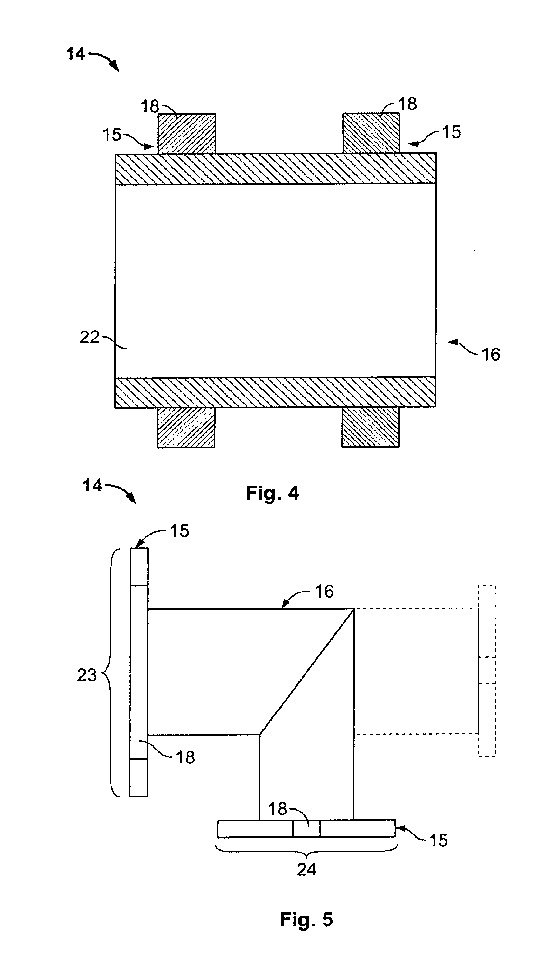

Figure 4 shows a sectional view along section A-A in Figure 3. Figure 4 may be understood to mean that the retaining means 15 are rigidly fixed to the lead-through element 16, for instance by an adhesive. Alternatively, the coupling device 14 may also be of one-piece construction, for instance constructed from injection molding, comprising a unitary molded retaining means and a lead-through element.

In a multipart embodiment of the coupling device 14 it would be feasible for the retaining means to be supplied together with a tube. The tube could be shortened to an appropriate length immediately before installation and the retaining means 15 could then be fixed in a suitable position. Thus, flexible length adjustment of the coupling device 14 could be achieved.

According to the illustration of Figure 4, the lead-through element 16 may also be constructed in such a way that it has a substantially polygonal cross-section.

Figure 5 shows a coupling device 14 comprising an angled lead-through element 16. The lead-through element 16 could be angled or indeed bent. In this way, branch and/or connection boxes 1, which are arranged at different angles or offset could be connected together. Figure 5 may also be understood to mean that the lead-through element 16 is of flexible construction, in order to make up for the differences in position described above. However, it is also possible to rigidly construct the lead-through element 16, for example of a plastics material, for instance polypropylene.

According to Figure 5, the coupling device 14 comprises different retaining means 15. The retaining means 15 have different sizes, which are indicated by the curly brackets 23 and 24. The width of each projections 18 is likewise illustrated as differing sizes. Such a coupling device 14 could be used to connect together branch and/or connection boxes 1 of different sizes. In this case, the coupling device 14 could additionally serve as a kind of adapter.

In Figure 5, an embodiment of the coupling device 14 is additionally illustrated by broken lines, where the coupling device 14 takes the form of a T, the T shape not being tied down to a right-angled arrangement. In this respect, the coupling device 14 may be used in an arrangement for branching off a connection of the cable 10, 11.

It could also be conceivable however for further branching lead-through element 16 segments to be provided, which could result in an X- or star-shape of the coupling device 14. The branches of the lead-through element 16 could likewise be arranged three-dimensionally, pointing in different spatial directions.

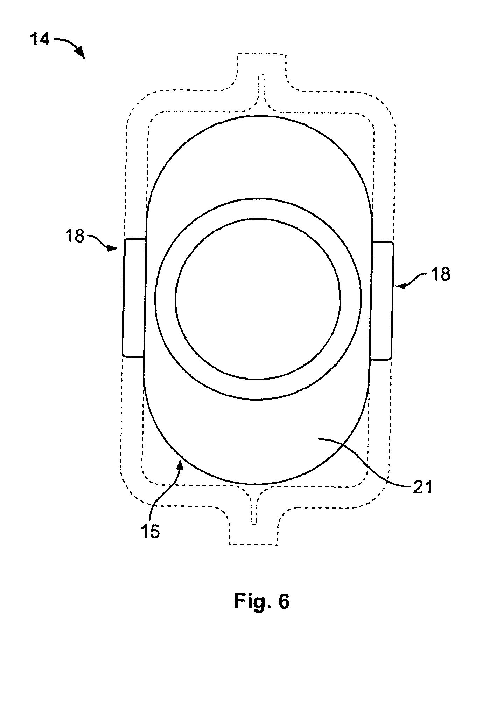

Figure 6 shows the end-on view of a coupling device 14 according to the invention, the retaining means 15 having a rounded circumferential cross-sectional area. In this embodiment, significantly greater tolerances could be applied during production of the plate-shaped retaining means 15, since a larger gap would be present between the outer outline of the circumferential cross-sectional area 21 and the closed box halves 2, as illustrated in Figure 6 by broken lines.

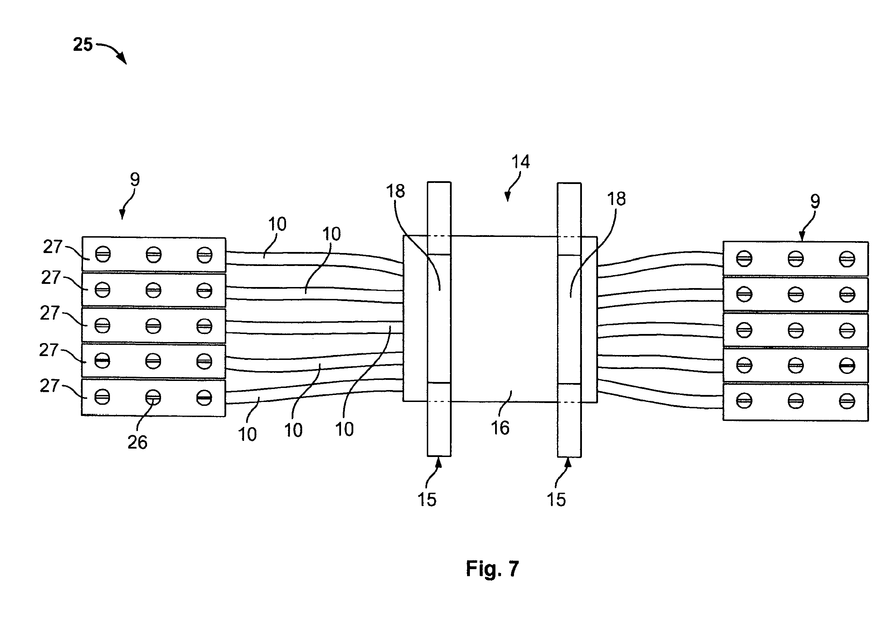

Figure 7 shows a schematic view of an assembly consisting of a plurality of conductor elements 10, two cable terminals 9 and a coupling device 14. The mutually opposing cable terminals 9 are connected together by means of the insulated conductor elements 10. The insulated conductor elements 10 are introduced into the terminal 9, at the ends which are not shown, and mechanically fixed in place by means of a plurality of screws 26, therefore electrically connecting the conductor elements 10 to the respective terminal 27. The conductor elements 10 are passed through the connection opening 22 within the lead-through element 16. The connection opening 22 is not shown in Figure 7 for reasons of clarity.

It is conceivable for the assembly 25 to be delivered preassembled as illustrated in Figure 7. However, it is also possible to prepare the assembly as a kit of individual parts. In that case, the conductor elements 10 are cut suitably to length and bared at the ends thereof, and optionally provided with ferrules.

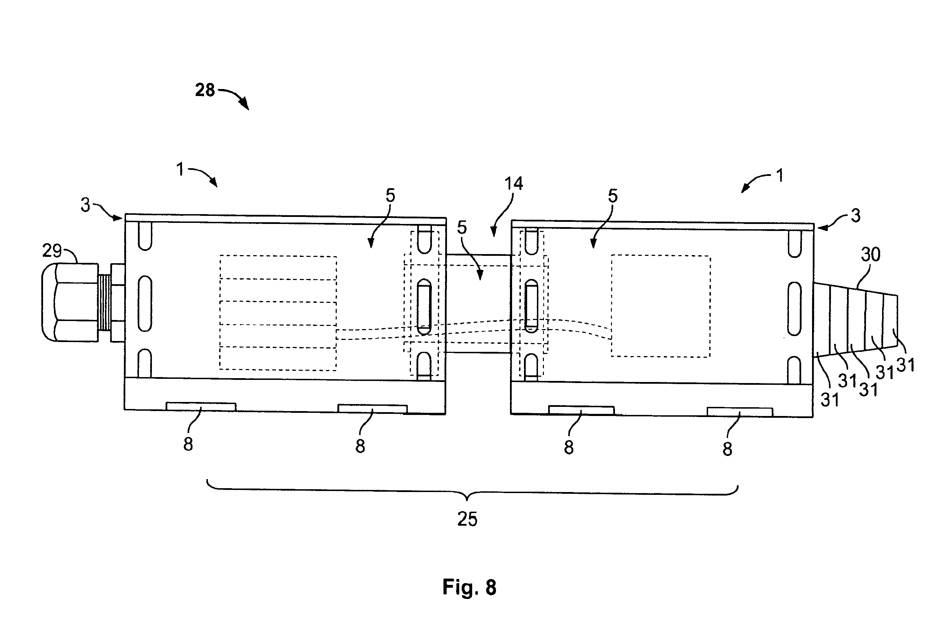

Figure 8 shows a kit 28 having two branch and/or connection boxes 1, with the coupling device 14 according to the invention, inserted as part of the assembly 25 into the two branch and/or connection boxes 1. The branch and/or connection boxes 1 are shown in a closed position. The connecting means of the assembly 25, located inside the branch and/or connection boxes, are shown in broken cables for greater clarity. On the left-hand side, a terminal 9 with a plurality of connection terminals is indicated. And, on the right-hand side, a block with just one connection terminal. This is intended to make it clear that the terminal 9 may have a different number of connection terminals, depending on the use requirements.

The conductor elements 10 extend through the coupling device 14 from one branch and/or connection box 1 into the other one. The conductor elements 10 used, may be individual conductor elements 10, but a sheathed cable 11 could also be passed through the lead-through element 16. The conductor elements 10 and the terminal 9 are here pressed into the troughs 4, which have been filled with the insulating gel 5. The insulating gel 5 surrounds the introduced body and is partially displaced thereby, such that parts of the insulating gel may flow to the ends of the branch and/or connection boxes 1, and some of the insulating gel 5 may penetrate into the connection opening 22. The insulating gel 5 could optionally fill these completely.

Any desired number of branch and/or connection boxes 1 may be connected together in series in the manner described.

By way of example, a screwed gland 29, for instance a PG screwed gland, is shown on the left-hand side in Figure 8, together with a flexible rubber grommet 30. The screwed gland 29 for its part, serves as a strain relief device, for a cable introduced therein. On the other hand, the screw gland 29 serves as a shielding means against any solids or moisture, which may penetrate therein. Strain relief may also be provided in a manner other than the screwed gland illustrated. Options for providing such strain relief are known to the person skilled in the art. The flexible rubber grommet 30 has a plurality of concentric portions 31, which in each case have a diameter that diminishes in the direction away from the box. Corresponding portions 31 are detached from the grommet 30 as a function of the cross-sectional diameter of the cable to be introduced. The strain relief device 29 or the dust and/or moisture protection means 30 is fastened to a stop plate, which is fastened to the branch and/or connection box 1 in a similar manner to the retaining means 15 of the coupling device 14.

It is possible that the cable 11 or the conducting elements 10 used comprise of telecommunications cables, control cables, optical cables or other cables needing protection from external influences.

The features of the embodiments illustrated are provided with corresponding reference numerals, to make it clear that the features illustrated of the various embodiments may be combined together, insofar as these features differ in the illustrations in the figures and in the description.

## Claims

1. A coupling device (14) for coupling together branch and/or connection boxes (1), fillable with an insulating gel, for cables (11), in particular low-voltage cables, wherein the coupling device (14) comprises on two sides, in each case, at least one mechanically engaging retaining means (15) for mechanically connecting the coupling device (14) to a branch and/or connection box (1), and at least one lead-through element (16) is provided, which comprises at least one through connection opening (22) constructed so as to connect spatially the branch and/or connection boxes (1).

2. A coupling device according to claim 1, wherein the retaining means (15) and the lead-through element (16) are a unitary construction.

3. A coupling device according to any one of the preceding claims, wherein the retaining means (15) and/or the lead-through element (16) are formed through injection molding.

4. A coupling device according to any one of the preceding claims, wherein the coupling device (14) with the retaining elements (15) and the lead-through element (16) is a multipart construction.

5. A coupling device according to any one of the preceding claims, wherein the retaining means (15) is held by friction fit in the branch and/or connection box (1).

6. A coupling device according to any one of the preceding claims, wherein the lead-through element (16) is bent and/or angled.

7. A coupling device according to any one of the preceding claims, wherein the retaining means (15) have a cross-sectional shape that corresponds to the opening in the branch and/or connection box (1).

8. A coupling device according to any one of claims 1 to 6, wherein the retaining means (15) have a rounded circumferential cross-sectional shape.

9. A coupling device according to any one of the preceding claims, wherein the retaining means (15) are of varying construction, in particular of different sizes.

10. A coupling device according to any one of the preceding claims, wherein the lead-through element (16) is of rigid construction.

11. A coupling device according to claims 1 to 10, wherein the lead-through element (16) is of flexible construction.

12. A coupling device according to any one of the preceding claims, wherein the lead-through element (16) is of tubular construction.

13. A coupling device according to any one of the preceding claims, wherein the lead-through element (16) is of shielding construction, in particular by way of a metallic casing.

14. An assembly (25) with at least two cable terminals (9), at least one cable (11) and the coupling device (14) according to any one of claims 1 to 13, wherein the terminals (9) are connected together by at least one cable (11), and at least one cable (11) is provided as passing through the connection opening (22) of the coupling device (14).

15. A kit comprising the assembly (25) according to claim 14 and at least two branch and/or connection boxes (1) which are connectable together mechanically via the coupling device (14), wherein the terminal (9) may in each case be introduced into a branch and/or connection box (1), and the cable (11) may be passed through the connection opening (22) of the coupling device (14) and connect the terminal (9) together electrically.
